# EUROPÄISCHE PATENTSCHRIFT

(11) **EP 3 326 249 B1**
(45) Veröffentlichungstag und Bekanntmachung des Hinweises auf die Patenterteilung: **30.10.2019**
(21) Anmeldenummer: 16754172.1
(22) Anmeldetag: 18.07.2016
(51) Int. Cl.: H02B 1/30, H02B 1/01, F16B 2/06, H02B 1/56

(54) **ANORDNUNG AUS EINEM DACHAUFBAU UND EINEM BEFESTIGUNSSYSTEM FÜR DIE BEFESTIGUNG DES DACHAUFBAUS IN EINEM AUSSCHNITT AUF DEM DACH EINES SCHALTSCHRANKS**
ARRANGEMENT COMPRISING A ROOF SYSTEM AND A FASTENING SYSTEM FOR THE FASTENING OF THE ROOF SYSTEM ON THE ROOF OF AN ELECTRICAL CABINET
AGENCEMENT COMPRENANT UNE PARTIE HAUTE DE TOIT ET UN SYSTÈME DE FIXATION POUR LA FIXATION DE LA PARTIE HAUTE DE TOIT SUR LE TOIT D'UNE ARMOIRE ÉLECTRIQUE

(30) Priorität: 23.07.2015 DE 102015111992
(43) Veröffentlichungstag der Anmeldung: 30.05.2018
(73) Patentinhaber: Rittal GmbH & Co. KG, 35745 Herborn (DE)
(72) Erfinder: BÄUMER, Carsten, 57258 Freudenberg (DE)
(74) Vertreter: Angerhausen, Christoph
(86) Internationale Anmeldenummer: PCT/DE2016/100323
(87) Internationale Veröffentlichungsnummer: WO 2017/012611

(56) Entgegenhaltungen:
- EP-A1- 0 594 542
- DE-C1- 4 110 323
- DE-U1- 8 205 341

## Beschreibung

Die Erfindung betrifft eine Anordnung aus einem Dachaufbau, insbesondere einem Kühlgerät, und einem Befestigungssystem für die Befestigung des Dachaufbaus in einem Ausschnitt auf einem Dach eines Schaltschranks. Eine derartige Anordnung ist aus der DE 41 10 323 C1 bekannt. Ähnliche Anordnungen zeigen auch die EP 0 594 542 A1 und die DE 82 05 341 U1.

Bei den bisher bekannten Befestigungssystemen ist es stets vorgesehen, dass diese entweder nur von der Innenseite des Schaltschranks oder nur von der Außenseite des Schaltschranks betätigt werden können. Insbesondere dann, wenn der Innenraum des Schaltschranks noch nicht ausgebaut ist, ist es häufig wünschenswert, dass die Befestigung des Dachaufbaus von der Innenseite des Schaltschranks her erfolgen kann, damit für die Betätigung der Befestigungsmittel beispielsweise darauf verzichtet werden kann, dass der Schaltschrank mit einer Leiter oder dergleichen erklommen wird. Ist der Schaltschrank dann ausgebaut und soll beispielsweise der bereits montierte Dachaufbau verändert werden, kommt es vor, dass die Befestigungsmittel für den Dachaufbau von der Innenseite des Schaltschranks nur schwer zugänglich sind. In diesem Fall wäre es dann vorteilhaft gewesen, wenn der Dachaufbau mit Befestigungsmitteln befestigt worden wäre, die von der Außenseite des Schaltschranks her zugänglich sind.

Es ist daher die Aufgabe der Erfindung, eine Anordnung der eingangs beschriebenen Art vorzuschlagen, welche einfach zu bedienen ist und die sichere Festlegung eines Dachaufbaus an dem Schaltschrank ermöglicht.

Diese Aufgabe wird erfindungsgemäß durch eine Anordnung mit den Merkmalen des Anspruchs 1 gelöst. Die abhängigen Ansprüche betreffen jeweils vorteilhafte Ausführungsformen der Erfindung.

Demgemäß weist das Befestigungssystem eine mit einem dem Dachaufbau verbundene Vorspanneinrichtung sowie eine Befestigungsklammer auf, wobei die Befestigungsklammer ein festes Ende, über das die Befestigungsklammer an einer Innenseite des Dachaufbaus festgelegt ist, und ein gegenüber dem festen Ende bewegliches Ende, an dem die Vorspanneinrichtung angreift, aufweist, so dass ein Krümmungsradius der Befestigungsklammer über die Vorspanneinrichtung einstellbar ist, wobei in einer ersten Stellung der Vorspanneinrichtung die Befestigungsklammer dazu eingerichtet ist, eine Berandung des eines Ausschnitts zu untergreifen und so den Dachaufbau an dem einem Schaltschrank festzulegen, und in einer zweiten Stellung der Vorspanneinrichtung die Befestigungsklammer dazu eingerichtet ist, den Ausschnitt freizugeben, wobei sich die Vorspanneinrichtung von einer Außenseite des Dachaufbaus durch den Dachaufbau hindurch bis zu einer Innenseite des Dachaufbaus erstreckt, an der Außenseite einen ersten Antrieb für ein Werkzeug und an der Innenseite einen zweiten Antrieb für ein Werkzeug aufweist.

Der erste und der zweite Antrieb können beispielsweise Schraubenantriebe sein, beispielsweise ein Torx25-Antrieb.

Dadurch wird ein Befestigungssystem erreicht, bei dem für die Montage des Dachaufbaus an einem Ausschnitt in dem Dach eines Schaltschranks der Dachaufbau zunächst von der Innenseite des Schaltschranks erfolgen kann, wodurch insofern eine Erleichterung für den Benutzer erreicht wird, da dieser keine Leiter oder dergleichen benötigt. Füllt sich der Schaltschrank im Laufe der Zeit mit Komponenten, oder ist der Bauraum des Schaltschranks so weit belegt, dass die Montage bzw. Demontage des Dachaufbaus von innen nicht mehr möglich ist, so kann der zuvor aus dem Schaltschrankinnern betätigte Befestiger auch von der Schaltschrankaußenseite, genauer von der Dachseite des Schaltschranks aus, betätigt werden, wobei der gesamte Funktionsumfang des Befestigungssystems erhalten bleibt.

Weiterhin kann die Vorspanneinrichtung einen ersten Bolzen mit dem ersten Antrieb für ein Werkzeug und einen zweiten Bolzen mit dem zweiten Antrieb für ein Werkzeug aufweisen, wobei die Bolzen drehfest miteinander verbunden sind. Dazu können die Bolzen komplementäre Gewinde aufweisen, über die die Bolzen ineinander greifen, wobei die Bolzen für die drehfeste Verbindung miteinander ausgelegt sein können. Sie können beispielsweise verklebt sein.

Es ist ebenfalls denkbar, dass einer der Bolzen einen Bolzenschaft mit einem Außengewinde aufweist, mit dem sich der Bolzen durch eine einen Durchlass zwischen einer Innenseite des Dachaufbaus und einer Außenseite des Dachaufbaus bildende Gewindehülse mit komplementärem Innengewinde hindurch erstreckt, wobei die Gewindehülse um ihre Längsachse verdrehsicher mit dem Dachaufbau verbunden ist. Die Gewindehülse kann somit ein Gewindelager für den Bolzenschaft bilden, entlang welcher dieser drehverstellbar unterschiedliche Positionen einnehmen kann, um die Befestigungsklammer, genauer deren bewegliches Ende variabel zu verstellen.

Der zweite Bolzen kann als eine Hülsenmutter ausgebildet sein, mit einem Schraubenkopf, der den zweiten Antrieb aufweist.

Weiterhin kann die Befestigungsklammer an dem beweglichen Ende ein Langloch aufweisen, das sich entlang der Befestigungsklammer in Richtung des festen Endes erstreckt, wobei sich einer der Bolzen mit seinem Bolzenschaft durch das Langloch erstreckt und die Befestigungsklammer mit einem Randbereich des Langlochs an einem Bolzenkopf des zweiten Bolzens lagert, so dass der Bolzenschaft entlang des Langlochs geführt ist, wenn die Vorspanneinrichtung zwischen der ersten und der zweiten Stellung verstellt wird.

Die Befestigungsklammer kann mit ihrem festen Ende an einer Innenseite des Dachaufbaus vertikal oberhalb des Ausschnitts und beabstandet von einem Rand des Ausschnitts an der Innenseite des Dachaufbaus festgelegt sein, sich im weiteren Verlauf durch den Ausschnitt hindurch in den Schaltschrankinnenraum hinein erstrecken und dem Rand des Ausschnitts annähern. Um das sichere Ein- und Ausschwenken der Befestigungsklammer zu gewährleisten, kann vorgesehen sein, dass die Vorspanneinrichtung mit einem Federelement in die zweite Stellung vorgespannt ist.

Die Befestigungsklammer kann aus einem federelastischen Material und vorzugsweise aus Federstahl ausgebildet sein, wobei die Befestigungsklammer weiterhin eine Vorspannung in Richtung der zweiten Stellung aufweisen kann.

Die erfindungsgemäße Anordnung ermöglicht es, dass auch jeder Zeit nach der Befestigung des Dachaufbaus auf dem Dach des Schaltschranks eine Nachbearbeitung der Dachaufbaubefestigung, insbesondere ein Nachspannen des Befestigungssystems möglich ist. Dazu kann auch vorgesehen sein, dass der Antrieb an der Schaltschrankinnenseite und der Antrieb an der Schaltschrankaußenseite identisch ausgebildet sind, so dass entsprechend identische Werkzeuge für die Betätigung des Antriebs verwendet werden können.

Es ist weiterhin möglich, dass der Dachaufbau einen umlaufenden Flansch aufweist, über den der Dachaufbau an einer Berandung des Ausschnitts des Schaltschrankdachs aufgesetzt ist, wobei in einem Überlappungsbereich zwischen dem umlaufenden Flansch und dem Rand ein Dichtelement angeordnet ist, dessen Kompression über die Vorspannvorrichtung variabel einstellbar ist.

Weitere Einzelheiten werden anhand der nachstehenden Figuren erläutert. Dabei zeigt:
- Figur 1: eine angeschnittene Draufsicht auf die Oberseite einer Schaltschrankanordnung mit einer Ausführungsform des erfindungsgemäßen Befestigungssystems;
- Figur 2: die Ausführungsform gemäß Figur 1, wobei das Befestigungssystem von der Innenseite der Schaltschrankanordnung her betrachtet dargestellt ist;
- Figur 3: die Ansicht gemäß Figur 2, wobei die Befestigungsklammer in der ersten Stellung gezeigt ist, und
- Figur 4: eine weitere Ausführungsform des erfindungsgemäßen Befestigungssystems.

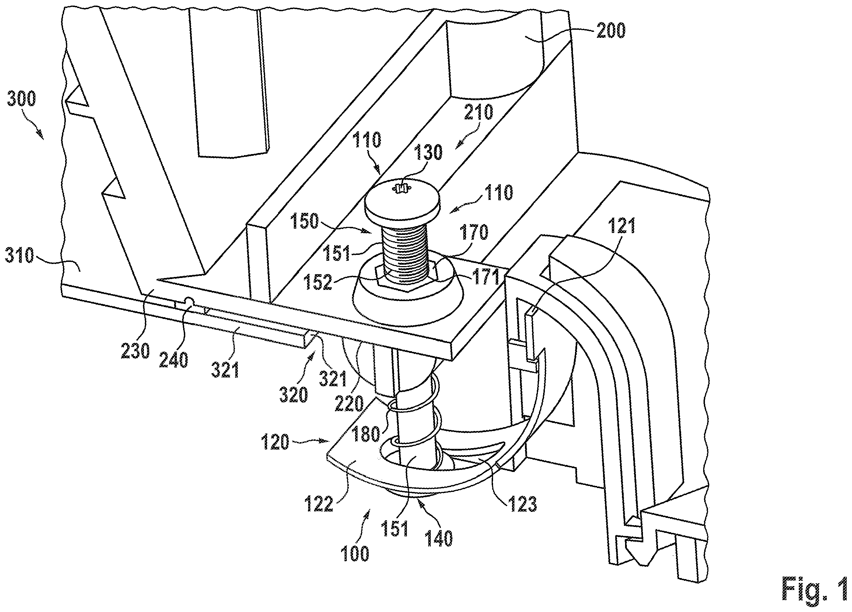

Bei der in Figur 1 dargestellten Ausführungsform eines Befestigungssystems 100 für die Befestigung eines Dachaufbaus 200 in oder an einem Ausschnitt 320 auf dem Dach 310 eines Schaltschranks 300 bilden die wesentlichen Bestandteile des Befestigungssystems 100 die mit dem Dachaufbau 200 verbundene Vorspanneinrichtung 110 sowie die Befestigungsklammer 120, welche über die Vorspanneinrichtung 110 zwischen einer ersten Stellung der Vorspanneinrichtung, in der die Befestigungsklammer 120 eine Berandung 321 des Ausschnitts 320 untergreift und so den Dachaufbau 200 an dem Schaltschrank 300 festlegt, und einer zweiten Stellung der Vorspanneinrichtung, in der die Befestigungsklammer den Ausschnitt freigibt, wahlweise hin- und herbewegt werden kann.

Die Befestigungsklammer 120 weist ein festes Ende 121 auf, über das die Befestigungsklammer 120 an der Innenseite 220 des Dachaufbaus 200 festgelegt ist. Die Befestigungsklammer 120 weist weiterhin ein dem festen Ende 121 gegenüber liegendes bewegliches Ende 122 auf, an dem die Vorspanneinrichtung angreift, so dass eine Krümmung der Befestigungsklammer 120, mithin die Lage des beweglichen Endes 122 in Bezug auf die Berandung 321 des Ausschnitts 320, durch Betätigen der Vorspanneinrichtung 110 eingestellt werden kann.

Die Vorspanneinrichtung 110 weist einen Bolzen 150 mit einem Bolzenschaft 151 auf, der wiederum ein Außengewinde 152 aufweist, über den der Bolzen 150 in eine Gewindehülse 170 mit einem komplementären Innengewinde 171 eingeschraubt ist. Die Gewindehülse 170 weist eine mehrkantige Außenkontur auf, über die sie zumindest formschlüssig in einer Aufnahme des Dachaufbaus aufgenommen ist. Die Gewindehülse 170 bildet gerade einen Durchgang durch den Dachaufbau 200 und verbindet somit die Außenseite 210 des Dachaufbaus 200 mit der Innenseite 220 des Dachaufbaus 200.

Eine Schraubenfeder 180 ist dazu vorgesehen, um die Befestigungsklammer 120 beim Betätigen des Antriebs 130, wodurch der Bolzen 150 relativ zu der Hülse 170 verstellt wird, definiert zu verschwenken.

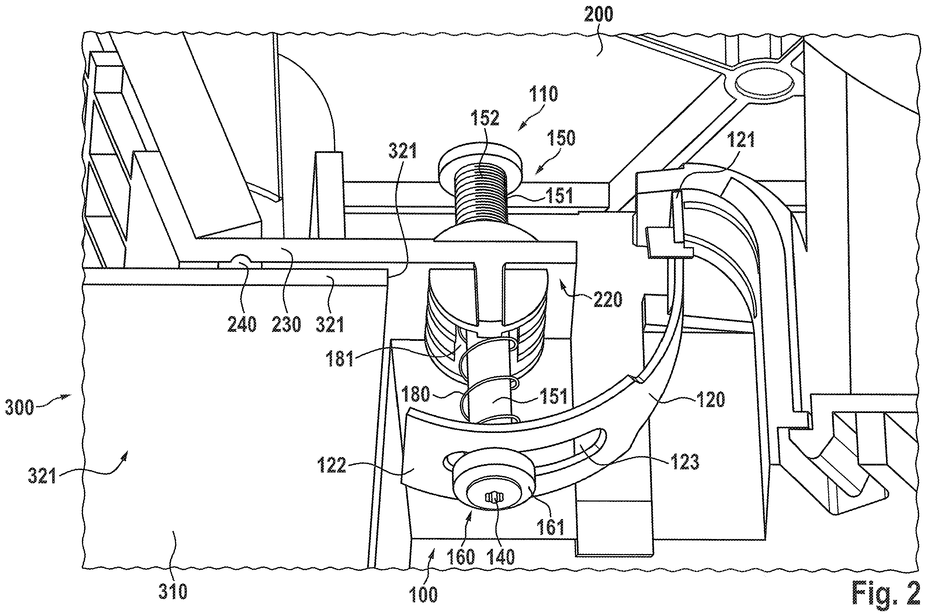

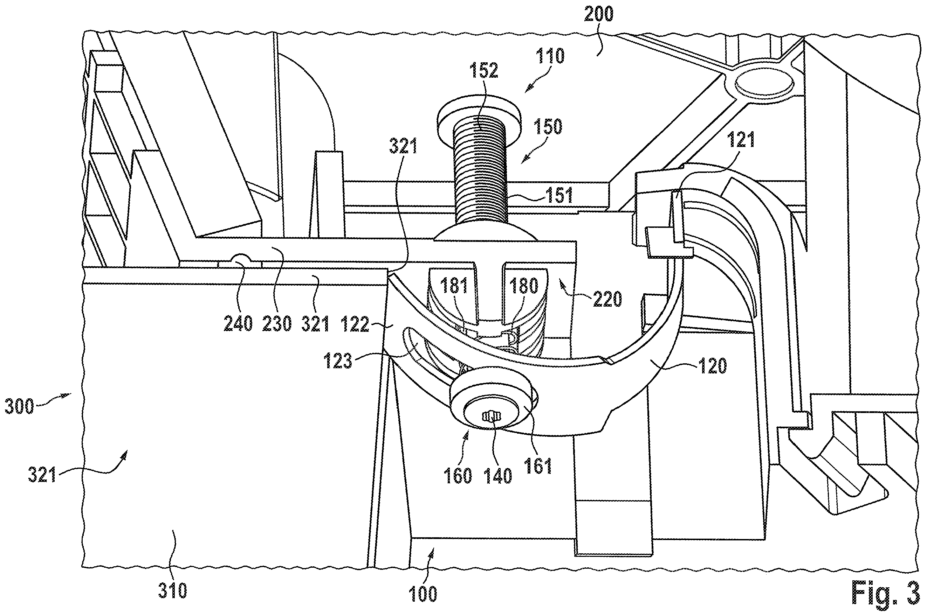

Die Befestigungsklammer 120 weist an ihrem beweglichen Ende 122 ein Langloch 123 auf, in welchem der Schaft 151 des Bolzens 150 geführt ist, wenn die Vorspanneinrichtung 110 betätigt wird, um die Befestigungsklammer aus der in den Figuren 1 und 2 dargestellten Freigabeposition in die in Figur 3 dargestellte Verriegelungsposition zu verlagern.

Ein umlaufender Flansch 230 des Dachaufbaus 200 überlappt mit einem Randbereich 321 des Dachs 310 des Schaltschranks, wobei in dem Überlappungsbereich ein Dichtelement 240 angeordnet ist. Es ist erkennbar, dass das erfindungsgemäße Befestigungssystem weiterhin den Vorteil aufweist, dass es ermöglicht, die Kompression des Dichtelements 240 und damit die Dichtwirkung dieses über die Vorspanneinrichtung 110 variabel einzustellen.

Der zweite Bolzen 160 ist als eine Hülsenmutter ausgebildet, die auf ein Außengewinde des oberen Bolzens 150 aufgeschraubt ist. Mit der Hülsenmutter ist auch der Bolzenkopf 161 an dem unteren Ende des Bolzens 150 festgelegt, um die Befestigungsklammer 120 über das Langloch 123 mit der Vorspanneinrichtung zu verbinden. Der Bolzenkopf 161 weist gerade eine Lagerfläche auf, auf der die Befestigungsklammer 120 mit dem Randbereich des Langlochs 123 aufliegt.

Während in der in den Figuren 1 und 2 dargestellten Freigabeposition der Randbereich 321 des Dachs 310 von dem beweglichen Ende 122 der Befestigungsklammer 120 nicht hintergriffen, sondern das freie Ende 122 vollständig in dem Ausschnitt 320 des Dachs 310 angeordnet ist, zeigt die Figur 3 den Zustand, in dem das bewegliche Ende 122 den Rand 321 des Ausschnitts 320 untergreift und an diesem anliegt. In der Zusammenschau der Figuren 2 und 3 ist auch zu erkennen, dass für die Verlagerung des beweglichen Endes 122 zwischen der Freigabeposition und der Verriegelungsposition die Vorspanneinrichtung 110, mithin der Bolzenschaft 151, in der Darstellung nach oben verlagert worden und dementsprechend das Federelement 180 komprimiert worden ist. Das Federelement 180 ist als eine koaxial zum Bolzenschaft 151 angeordnete Spiralfeder ausgebildet, die in einer Federaufnahme 181 an der Innenseite 220 des Dachaufbaus 200 aufgenommen ist.

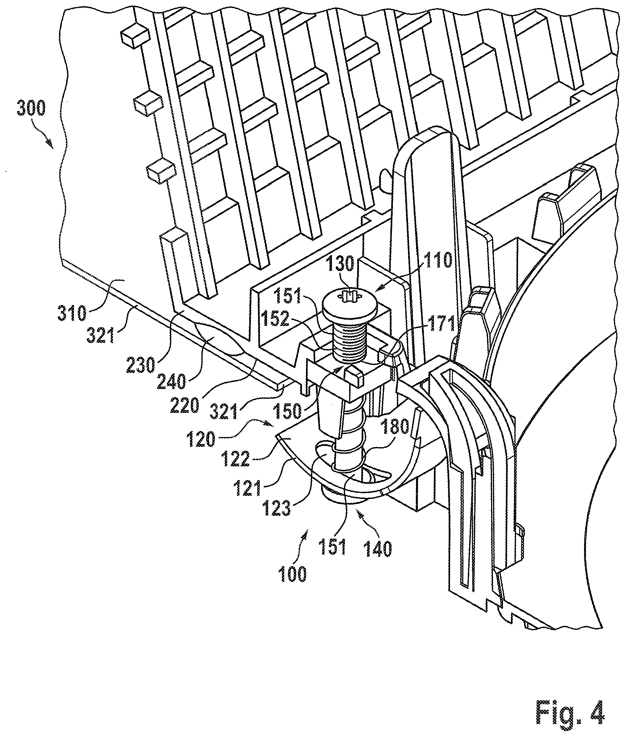

Die Figur 4 zeigt eine weitere Ausführungsform des erfindungsgemäßen Befestigungssystems, bei dem die Gewindehülse 170 nicht von oben in eine Kunststoffwanne eingesetzt, sondern nach Art einer Käfigmutter ausgebildet ist, die seitlich in eine entsprechende Aufnahme eingeschoben werden kann. Die Gewindehülse ist somit vorzugsweise rechteckig ausgebildet und weist eine Gewindeaufnahme auf.

### Bezugszeichenliste:

- 100: Befestigungssystem
- 110: Vorspanneinrichtung
- 120: Befestigungsklammer
- 121: festes Ende
- 122: bewegliches Ende
- 123: Langloch
- 130: erster Antrieb
- 140: zweiter Antrieb
- 150: erster Bolzen
- 151: Bolzenschaft
- 152: Außengewinde
- 160: zweiter Bolzen
- 161: Bolzenkopf
- 170: Gewindehülse
- 171: Innengewinde
- 180: Feder
- 181: Federaufnahme
- 200: Dachaufbau
- 210: Außenseite
- 220: Innenseite
- 230: Flansch, umlaufend
- 240: Dichtelement
- 300: Schaltschrank
- 310: Dach
- 320: Ausschnitt
- 321: Wand des Ausschnitts

## Patentansprüche

1. Anordnung aus einem Dachaufbau (200), insbesondere einem Kühlgerät, und einem Befestigungssystem (100) für die Befestigung des Dachaufbaus (200) in einem Ausschnitt (320) auf einem Dach (310) eines Schaltschranks (300), **dadurch gekennzeichnet, dass** das Befestigungssystem eine mit dem Dachaufbau (200) verbundene Vorspanneinrichtung (110) sowie eine Befestigungsklammer (120) aufweist, wobei die Befestigungsklammer (120) ein festes Ende (121), über das die Befestigungsklammer (120) an einer Innenseite (220) des Dachaufbaus (200) festgelegt ist, und ein gegenüber dem festen Ende (121) bewegliches Ende (122), an dem die Vorspanneinrichtung (110) angreift, aufweist, so dass ein Krümmungsradius der Befestigungsklammer (120) über die Vorspanneinrichtung (110) einstellbar ist, wobei in einer ersten Stellung der Vorspanneinrichtung (110) die Befestigungsklammer (120) dazu eingerichtet ist, eine Berandung (321) eines Ausschnitts (320) zu untergreifen und so den Dachaufbau (200) an einem Schaltschrank (300) festzulegen, und in einer zweiten Stellung der Vorspanneinrichtung (110) die Befestigungsklammer (120) dazu eingerichtet ist, den Ausschnitt (320) freizugeben, wobei sich die Vorspanneinrichtung (110) von einer Außenseite (210) des Dachaufbaus (200) durch den Dachaufbau (200) hindurch bis zu einer Innenseite (220) des Dachaufbaus (200) erstreckt sowie an der Außenseite (210) einen ersten Antrieb (130) für ein Werkzeug und an der Innenseite (220) einen zweiten Antrieb (140) für ein Werkzeug aufweist.

2. Anordnung nach Anspruch 1, bei der die Vorspanneinrichtung (110) einen ersten Bolzen (150) mit dem ersten Antrieb (130) für ein Werkzeug und einen zweiten Bolzen (160) mit dem zweiten Antrieb (140) für ein Werkzeug aufweist, wobei die beiden Bolzen (150, 160) drehfest miteinander verbunden sind.

3. Anordnung nach Anspruch 2, bei der einer der Bolzen (150, 160) einen Bolzenschaft (151) mit einem Außengewinde (152) aufweist, mit dem sich der Bolzen (150) durch eine einen Durchlass zwischen einer Innenseite (220) des Dachaufbaus (200) und einer Außenseite (210) des Dachaufbaus (200) bildenden Gewindehülse (170) mit komplementärem Innengewinde (171) hindurch erstreckt, wobei die Gewindehülse (170) um ihre Längsachse verdrehsicher mit dem Dachaufbau (200) verbunden ist.

4. Anordnung nach Anspruch 2 oder 3, bei der der zweite Bolzen (160) als eine Hülsenmutter ausgebildet ist, mit einem Schraubenkopf, der den zweiten Antrieb (140) aufweist.

5. Anordnung nach einem der Ansprüche 2 bis 4, bei der die Befestigungsklammer (120) an dem beweglichen Ende (122) ein Langloch (123) aufweist, das sich entlang der Befestigungsklammer (120) in Richtung des festen Endes (121) erstreckt, wobei sich einer der Bolzen (150, 160) mit seinem Bolzenschaft (151) durch das Langloch (123) erstreckt und die Befestigungsklammer (120) mit einem Randbereich des Langlochs (123) an einem Bolzenkopf (161) des zweiten Bolzens (160) lagert, so dass der Bolzenschaft (151) entlang des Langlochs (123) geführt ist, wenn die Vorspanneinrichtung (110) zwischen der ersten und der zweiten Stellung verstellt wird.

6. Anordnung nach einem der vorangegangenen Ansprüche, bei der die Befestigungsklammer (120) dazu eingerichtet ist, mit ihrem festen Ende (121) an einer Innenseite (220) des Dachaufbaus (200) vertikal oberhalb des Ausschnitts (320) und beabstandet von einem Rand (321) des Ausschnitts (320) an der Innenseite (220) des Dachaufbaus (200) festgelegt zu sein und sich im weiteren Verlauf durch den Ausschnitt (320) hindurch zu erstrecken sowie sich dem Rand (321) des Ausschnitts (320) anzunähern.

7. Anordnung nach einem der vorangegangenen Ansprüche, bei der die Vorspanneinrichtung (110) mit einem Federelement (180) in die zweite Stellung vorgespannt ist.

8. Anordnung nach einem der vorangegangenen Ansprüche, bei der die Befestigungsklammer (120) aus einem federelastischen Material und vorzugsweise aus Federstahl ausgebildet ist, und wobei die Befestigungsklammer (120) eine Vorspannung in Richtung der zweiten Stellung aufweist.

9. Anordnung nach einem der vorangegangenen Ansprüche, bei der der Dachaufbau (200) einen umlaufenden Flansch (230) aufweist, über den der Dachaufbau (200) dazu eingerichtet ist, an einer Berandung (321) des Ausschnitts (320) des Schaltschrankdachs (310) aufgesetzt zu werden, wobei in einem Überlappungsbereich zwischen dem umlaufenden Flansch (230) und dem Rand (321) ein Dichtelement (240) angeordnet ist, dessen Kompression über die Vorspannvorrichtung (110) variabel einstellbar ist.

## Claims

1. An arrangement having a roof structure (200), in particular a cooling device, and a securing system (100) for securing a roof structure (200) in a notch (320) on a roof (310) of a switch cabinet (300), **characterized in that** the securing system comprises a pretensioning device (110) connected to the roof structure (200) as well as a securing clamp (120), wherein the securing clamp (120) comprises a fixed end (121), via which the securing clamp (120) is fixed to an inner side (220) of the roof structure (200), and an end (122) that moves with respect to the fixed end (121), on which the pretensioning device (110) engages, so that a radius of curvature of the securing clamp (120) can be set via the pretensioning device (110), wherein in a first position of the pretensioning device (110), the securing clamp (120) is configured to engage underneath an edge (321) of the notch (320), thereby fixing the roof structure (200) on aswitch cabinet (300), and in a second position of the pretensioning device (110), the securing clamp (120) is configured to release the notch (320), wherein the pretensioning device (110) extends from an outer side (210) of the roof structure (200) through the roof structure (200) up to an inner side (220) of the roof structure (200) and has a first drive (130) for a tool on the outer side (210), and has a second drive (140) for a tool on the inner side (220).

2. The arrangement of claim 1, wherein the pretensioning device (110) has a first bolt (150) having the first drive (130) for a tool and a second bolt (160) having the second drive (140) for a tool, wherein both bolts (150, 160) are non-rotatably connected to each other.

3. The arrangement of claim 2, wherein one of the bolts (150, 160) has a bolt shaft (151) having an outer thread (152), with which the bolt (150) extends through a threaded sleeve (170) having a complementary inner thread (171), which forms a passage between an inner side (220) of the roof structure (200) and an outer side (210) of the roof structure (200), wherein the threaded sleeve (170) is non-rotatably connected about its longitudinal axis to the roof structure (200).

4. The arrangement of claim 2 or 3, wherein the second bolt (160) is formed by a sleeve nut, having a screw head, which is provided with the second drive (140).

5. The arrangement of any of claims 2 to 4, wherein the securing clamp (120) is provided, at its movable end (122), with a slot (123), which extends along the securing clamp (120) in the direction of the fixed end (121), wherein one of the bolts (150, 160) extends, with its bolt shaft (151), through the slot (123) and supports the securing clamp (120) with an edge region of slot (123) on a bolt head (161) of second bolt (160), so that the bolt shaft (151) is guided along the slot (123), when the pretensioning device (110) is moved between the first and second position.

6. The arrangement of any of the preceding claims, wherein the securing clamp (120) is configured to be fixed with its fixed end (121) on an inner side (220) of roof structure (200), vertically above the notch (320) and at a distance from an edge (321) of notch (320) on the inner side (220) of roof structure (200), and then to extend through notch (320) and to approach the edge (321) of notch (320).

7. The arrangement of any of the preceding claims, wherein the pretensioning device (110) is biased by a spring element (180) in the second position.

8. The arrangement of any of the preceding claims, wherein the securing clamp (120) is made of an elastic spring material, and preferably a spring steel, and wherein the securing clamp (120) is biased in the direction of the second position.

9. The arrangement of any of the preceding claims, wherein the roof structure (200) has a surrounding flange (230), through which the roof structure (200) is configured to be applied onto an edge (321) of notch (320) of switch cabinet roof (310), wherein, in an overlapping region between the surrounding flange (230) and the edge (321) a sealing element (240) is disposed, the compression of which may be variably set by means of the pretensioning device (110).

## Revendications

1. Dispositif constitué d'une structure de toit (200), plus particulièrement d'un appareil de refroidissement et d'un système de fixation (100) pour la fixation de la structure de toit (200) dans une découpe (320) sur un toit (310) d'une armoire de commande (300), **caractérisé en ce que** le système de fixation comprend un dispositif de précontrainte (110) relié avec la structure de toit (200) ainsi qu'un clip de fixation (120), le clip de fixation (120) comprenant une extrémité fixe (121), par l'intermédiaire de laquelle le clip de fixation (120) est fixée à un côté interne (220) de la structure de toit (200), et une extrémité (122), mobile par rapport à l'extrémité fixe (121), sur laquelle s'emboîte le dispositif de précontrainte (110), de façon à ce qu'un rayon de courbure du clip de fixation (120) puisse être réglé par l'intermédiaire du dispositif de précontrainte (110), moyennant quoi, dans une première position du dispositif de précontrainte (110), le clip de fixation (120) est conçu pour accrocher par en dessous une bordure (321) d'une découpe (320) et pour fixer ainsi la structure de toit (200) à une armoire de commande (300) et, dans une deuxième position du dispositif de précontrainte (110), le clip de fixation (120) est conçu pour libérer la découpe (320), le dispositif de précontrainte (110) s'étendant d'un côté externe (210) de la structure de toit (200) à travers la structure de toit (200) jusqu'à un côté interne (220) de la structure de toit (200) et comprend, sur le côté externe (210), un premier dispositif d'entraînement (130) pour un outil et, sur le côté interne (220), un deuxième dispositif d'entraînement (140) pour un outil.

2. Dispositif selon la revendication 1, dans lequel le dispositif de précontrainte (110) comprend une première tige (150) avec le premier dispositif d'entraînement (130) pour un outil et une deuxième tige (160) avec le deuxième dispositif d'entraînement (140) pour un outil, les deux tiges (150, 160) étant reliées entre elles de manière solidaire en rotatbn.

3. Dispositif selon la revendication 2, dans lequel une des tiges (150, 160) comprend un axe de tige (151) avec un filetage externe (152), avec lequel la tige (150) s'étend à travers un manchon fileté (170), formant un passage entre un côté interne (220) de la structure de toit (200) et un côté externe (210) de la structure de toit (200), avec un filetage interne (171) complémentaire, le manchon fileté (170) étant relié avec la structure de toit (200) de manière immobilisée en rotation autour de son axe longitudinal.

4. Dispositif selon la revendication 2 ou 3, dans lequel la deuxième tige (160) est conçue comme un écrou-douille, avec une tête de vis qui comprend le deuxième dispositif d'entraînement (140).

5. Dispositif selon l'une des revendications 2 à 4, dans lequel le clip de fixation (120) comprend, au niveau de l'extrémité mobile (122), un trou oblong (123) qui s'étend le long du clip de fixation (120) en direction de l'extrémité fixe (121), une des tiges (150, 160) s'étendant, avec son axe de tige (151), à travers le trou oblong (123) et le clip de fixation (120) se logeant, avec une zone de bord du trou oblong (123), au niveau d'une tête de tige (161) de la deuxième tige (160), de façon à ce que l'axe de tige (151) soit guidé le long du trou oblong (123) lorsque le dispositif de précontrainte (110) est déplacé entre les première et deuxième positions.

6. Dispositif selon l'une des revendications précédentes, dans lequel le clip de fixation (120) est conçu pour être fixé, avec sa première extrémité (121), à un côté externe (220) de la structure de toit (200) verticalement au-dessus de la découpe (320) et éloigné d'un bord (321) de la découpe (320) sur le côté interne (220) de la structure de toit (200) et pour s'étendre ensuite à travers la découpe (320) et s'approcher du bord (321) de la découpe (320).

7. Dispositif selon l'une des revendications précédentes, dans lequel le dispositif de précontrainte (110) est précontraint avec un élément à ressort (180) dans la deuxième position.

8. Dispositif selon l'une des revendications précédentes, dans lequel le clip de fixation (120) est constitué d'un matériau élastique et de préférence d'un acier ressort et le clip de fixation (120) présentant une précontrainte en direction de la deuxième position.

9. Dispositif selon l'une des revendications précédentes, dans lequel la structure de toit (200) comprend une bride périphérique (230), par l'intermédiaire de laquelle la structure de toit (200) est conçue pour être posée sur une bordure (321) de la découpe (320) du toit de l'armoire de commande (310), moyennant quoi, dans une zone de chevauchement entre la bride périphérique (230) et le bord (321), un élément d'étanchéité (240) est disposé, dont la compression peut être réglée de manière variable par l'intermédiaire du dispositif de précontrainte (110).
